# EUROPEAN PATENT APPLICATION

(11) **EP 1 801 824 A1**
(43) Date of publication of application: **27.06.2007**
(21) Application number: 05405719.5
(22) Date of filing: 23.12.2005
(51) Int. Cl.: H01G 4/012

(54) **A film, an electrode configuration, a bushing and a method of using an electrode configuration or a bushing**

(71) Applicant: ABB Research Ltd, 8050 Zürich (CH)
(72) Inventor: Carlen, Martin, 5443 Niederrohrdorf (CH); Christen, Thomas, 5413 Birmenstorf (CH); Fuhrmann, Henning, 8048 Zürich (CH); Votteler, Torsten, 5443 Niederrohrdorf (CH)
(74) Representative: ABB Patent Attorneys

(57) **Abstract**

A film (1) comprises a base (2) consisting of an electrically insulating polymer which carries on one or both surfaces a sequence of electrically conductively coated areas (3) which are separated by non-coated interstices (4). The film or a superposition of films arranged one above the other can be shaped, i.e., folded or preferably wound to form an electrode configuration with a plurality of essentially parallel electrodes which are insulated from each other and consist each of one or more electrode layers formed by the coated areas (3) and separated by insulating layers formed by sections of the base (2). An electrode layer may comprise two adjacent coated areas pertaining to subsequent turns. The electrode configuration can be used to subdivide a potential difference, e.g., in a bushing, into a series of smaller potential differences between subsequent electrodes, with the smaller potential differences preferably smaller than the minimum of the Paschen curve.

## Description

### Field of the invention

The invention concerns a film according to the generic part of claim 1 and an electrode configuration comprising a film according to the invention, in particular for a bushing. Electrode configurations and bushings of this type are typically employed in MV and HV electrical installations. The invention also concerns a method of using an electrode configuration or a bushing according to the invention.

### Prior art

Films of the generic type with a polymer base and at least one longitudinally contiguous strip of electrically conductive coating, in particular, metal, are well known, see, e.g., EP 1 329 915 A1. According to this document, two such films are wound into a coil together to form a capacitor.

Similar capacitive devices where two or three such films are arranged one immediately above the other and wound together are known from EP 1 341 195 A1. Part of the electrically conductive coatings serve as electrically unconnected floating electrodes which subdivide the potential drop between two electrodes connected to opposite leads. Subsequent electrodes are always separated by an electrically insulating base. At least part of the coatings form tracks arranged side by side on the base of the respective film. However, the tracks are always contiguous tracks,-i.e. uninterrupted in the longitudinal direction. Also, two of the tracks in question each extend to one of the lateral edges of the film so they can be contacted there.

Films of the types described above are not suitable as components of electrode configurations for the control of electric fields.

It is also well known in the art to use electrode configurations, in particular in bushings, comprising a series of essentially parallel electrodes which are electrically insulated from each other, for the control, in particular, the equalization, of electric fields. Large local field strength maxima which might give rise to disruptive discharges are thereby prevented. Known electrode configurations comprise a winding of paper impregnated with resin, oil or other dielectric substances and layers of metal foil or, alternatively, layers of electrically conductive ink or graphite paste applied to the paper which are each of them placed between subsequent turns of the winding.

Electrode configurations of this type are relatively difficult and costly to produce in the required high quality.

### Summary of the invention

It is an object of the invention to provide a film of the generic type which is suitable for the formation of electrode configurations by which an electric field between electrically conductive components - conductors, grounded housing parts and the like - which during operation assume different potentials can be controlled with great precision and, in particular, the often large potential differences between the components subdivided in a controlled manner into a relatively large number of small potential differences between mutually electrically insulated electrodes.

It is a further object of the invention to provide an electrode configuration which essentially consists of a film according to the invention or of several such films. Electrode configurations of high quality and reliability can be produced from such films in relatively simple and cost-saving ways. In particular, time-consuming drying and impregnation and in some cases curing steps as required for the production of known generic electrode configurations can usually be avoided.

A further advantage of-an electrode configuration according to the invention is the fact that the electrically conductive coating tends to evaporate around the location of a partial breakdown, that is, the electrode configuration is self-healing.

An electrode configuration as proposed is particularly suitable for a bushing where the configuration essentially fills a gap between a conductor rod or tube and a surrounding wall part, e.g., a grounded metal frame surrounding an opening through which the conductor is led into a housing, e.g., of a transformer or switch gear, or into a building.

It is particularly advantageous that, due to the fact that the base of a film according to the invention can be made very thin and therefore a large number of electrodes can be provided in a gap of a given width, electrode configurations and bushings of the inventive type can in most cases be used in such a way that the potential differences between subsequent electrodes are fairly small, in particular, smaller than the minimum voltage of the Paschen curve. In this case, no partial discharges will occur even where the electrode configuration contains voids or gas inclusions.

### Brief description of the drawings

In the following, the invention will be explained in more detail with reference to the following figures which show only embodiments.
- Fig. 1: schematically shows a partial top view of a polymer film according to the invention,
- Fig. 2: shows enlarged a cutout from Fig. 1 as indicated by II,
- Fig. 3: shows an axial section through a bushing according to the invention,
- Fig. 4: shows an axial view of the bushing of Fig. 3,
- Fig. 5a: schematically shows a partial longitudinal section of a film according to a first embodiment of the invention,
- Fig. 5b: schematically shows a cutout from a section of an electrode configuration wound from the film according to Fig. 5a,
- Fig. 6a: schematically shows a partial longitudinal section of a film according to a second embodiment of the invention,
- Fig. 6b: schematically shows a cutout from a section of an electrode configuration wound from the film according to Fig. 6a,
- Fig. 7a: schematically shows a partial longitudinal section of a superposition of two films, each according to the second embodiment of the invention, and
- Fig. 7b: schematically shows a cutout from a section of an electrode configuration wound from the superposition of films according to Fig. 7a.

### Description of the preferred embodiments

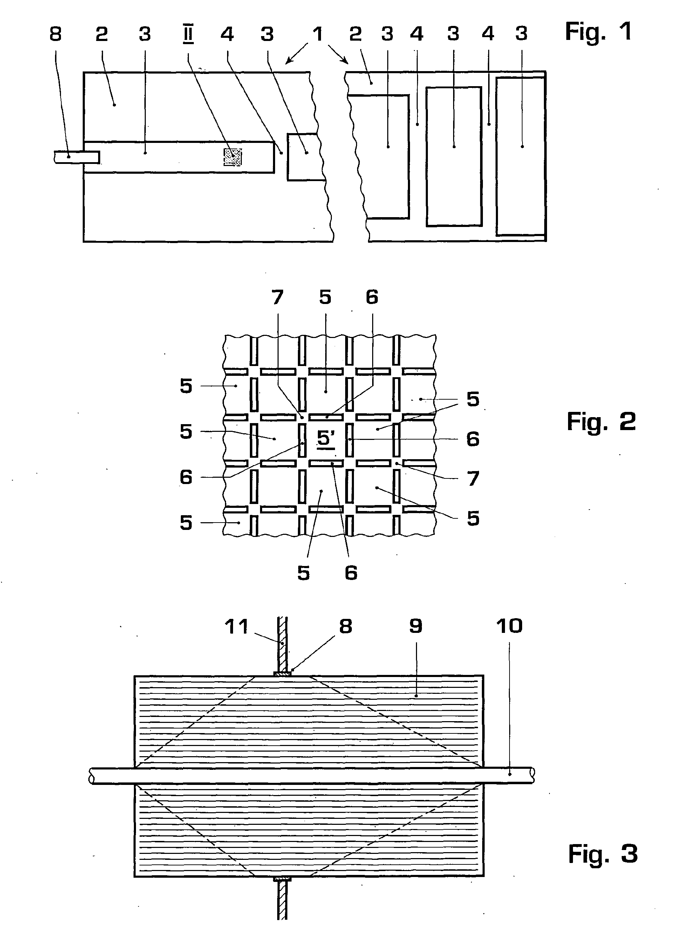

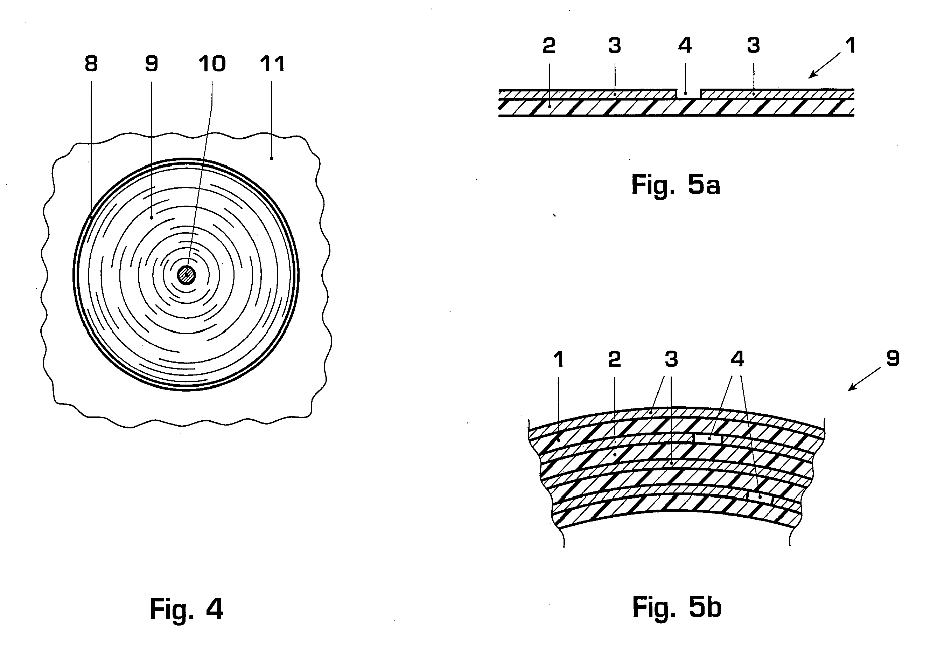

A film 1 which may be used for producing an electrode configuration, in particular for a bushing as shown in Figs. 3, 4 comprises (Fig. 1) a base 2 essentially consisting of electrically insulating polymer material, with a surface which is partially covered by a coating of electrically conductive material. The film 1 forms a long strip of usually but not necessarily constant width. Its thickness is preferably between 2µm and 20µm. The material of the base 2 is, e.g., polyethylene, polystyrole, polypropylene, polycarbonate, polyimide, PET, PEN, polyester, epoxy resin, polysulfone or a mixture of such polymers possibly also containing additives and suitable for forming a thin film with high dielectric strength. The coating is in the form of a single sequence of at least four, but usually a much higher number of rectangular coated areas 3 which follow one upon the other in a longitudinal direction. The lateral boundaries of the said coated areas 3 are spaced from the lateral edges of the film 1, i.e. the margins of the base 2 so the latter exhibits non-coated strips adjacent to its margins which extend with varying width but uninterruptedly over the whole length of the film 1. Subsequent coated areas 3 are in each case separated by a transverse interstice 4 or gap in the coating. As a consequence, the said areas 3 are electrically insulated from each other.

The coating consists preferably of metal, and is in particular a metallization applied by vapour deposition, but use of other electrically conductive materials beside metals, e.g., carbon or a semiconducting material, is also possible. The electrically conductive coating is patterned as known per se (s. EP 0 225 822 A1), that is, it consists of, e.g., quadratic, patches 5, 5' (s. Fig. 2 which shows an enlarged cutout II from Fig. 1) with adjacent patches 5, 5' separated by uncoated strips 6 and only connected by thin bridges 7 of coating at the corners. If a partial breakdown occurs at one of the patches, e.g., patch 5', the surrounding bridges 7 evaporate, thereby interrupting the electrically conductive connections of the patch 5' in question with its neighbours. Alternatively, a graded or uniform conductive coating can be used. The electrical conductivity of the coating may be relatively low as larger currents will normally be perpendicular, that is, its surface resistivity will usually be at least 1Ω_{□} (Ohm-square).

The leftmost of the areas 3 in Fig. 1 which is electrically conductively connected to a lead 8 is relatively narrow and long. The lateral extension of the coated areas 3 increases from left to right whereas their longitudinal extension decreases. While the increase in width is by a fixed amount from one coated area 3 to the next, the length decreases substantially proportionally to a square root of the longitudinal position of the coated area 3 on the film 1.

The film 1 is suitable for being wound - with its partially conductively coated surface facing inside - into a coil-shaped electrode configuration 9 which can be used in a bushing as shown in Figs. 3, 4. The electrode configuration 9 surrounds a conductor rod 10 with a rightmost coated area 3 of the film 1 in direct contact with the same, preferably wrapped around it, whereas the lead 8 surrounds the electrode configuration 9 and is in direct mechanical and electrically conductive contact with a grounded metal plate 11 which may be part of a housing and which forms a frame surrounding an opening through which the conductor rod 10 is led through the plate 11. The electrode configuration 9 substantially fills the gap between the conductor rod 10 and the frame. Alternatively, lead 8 is omitted with the outermost electrode of the electrode configuration being merely capacitively coupled to the housing via the frame which may be in the shape of a ring surrounding the electrode configuration and acting as a grounded electrode. The electrode configuration can be encapsulated in a casing of electrically insulating material for mechanical stabilization and protection.

With the lengths of the areas 3 following the rule indicated above, every one of them extends over a certain constant angle, in particular, over slightly more than two turns of the electrode configuration 9, forming an electrode comprising two essentially parallel electrode layers. Subsequent interstices 4 are slightly staggered (see Figs. 5a, 5b). As a consequence, radial components of the electric field are small in the neighbourhood of the interstices 4. Also, throughout every second winding of the film 1 both surfaces of the base 2 are adjacent to electrode layers pertaining to the same electrode as formed by one of the coated areas 3. Therefore the base 2 is not subjected to a strong and permanent electric field which is a further obstacle to an extension of any partial breakdown.

The width of the interstices 4 will have to be chosen large enough to prevent surface flashovers at the expected voltages. The interstices may, however, be much wider than this requirement necessitates and can extend over a complete turn of the winding or more. The risk of flashovers at the margins is generally quite small, the coated areas 3 being spaced from the lateral edges of the film 1. It is, however, possible to seal the winding there by welding or by covering it with resin or some other suitable material in order to protect the winding against humidity.

The width of the electrodes formed by the coated areas 3 decreases linearly as a function of their distance from the conductor rod 10 as indicated by dashed lines in Fig. 3. As the electrodes are electrically insulated from each other they are on usually different floating potentials. It is advantageous that the distances between subsequent electrodes are such that, with the expected maximum overall potential difference between the conductor and ground, the potential difference between the said electrodes is always below the minimum of the Paschen curve as partial breakdowns of an insulating layer between two subsequent electrodes cannot occur in this case.

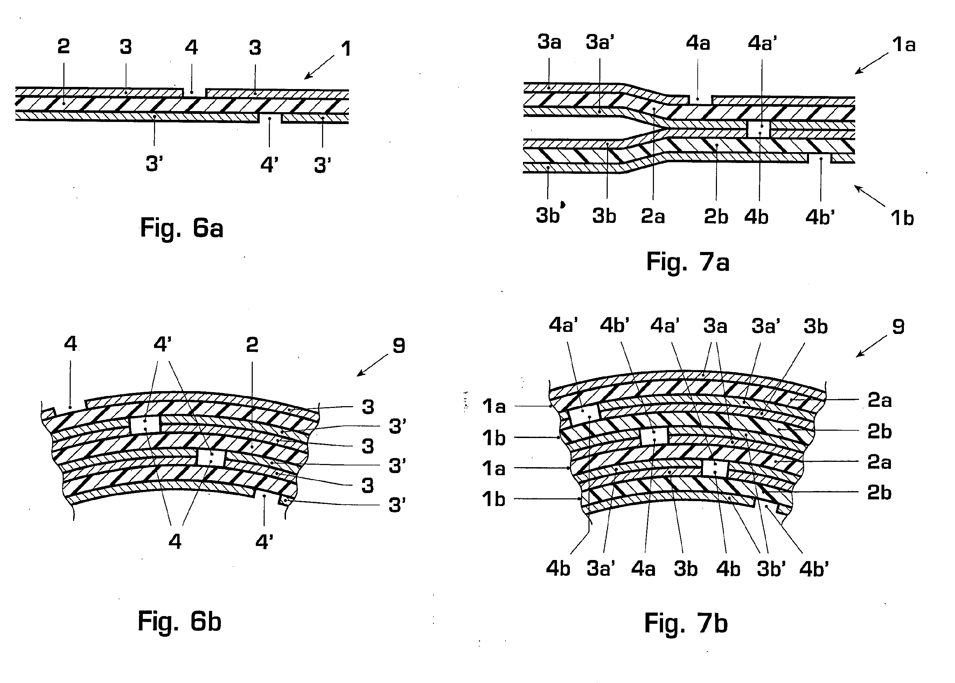

According to a second embodiment (Fig. 6a, 6b) of a film according to the invention both surfaces of the film 1 are each partially covered with an electrically conductive coating in the manner explained above. The film 1 is used to form an electrode configuration 9 like the one used in the bushing of Figs. 3, 4. The coated areas 3, 3' extend over slightly more than one turn of the winding which forms the electrode configuration 9. So, apart from a small overlap, every electrode consists of only one electrode layer. The interstices 4, 4' are staggered by the same amount and the coated area 3 and interstice 4 of the upper surface of a turn is congruent with the coated area 3' and the interstice 4' of the lower surface of a subsequent turn. Here, each electrode layer comprises two coated areas 3, 3' which are arranged one on top of the other. They are substantially congruent and virtually everywhere in mechanical and electrically conductive contact. As a consequence, eventual air inclusions between subsequent turns of the film 1 do not entail any risk of partial discharges as such inclusions are not exposed to a substantial electric field.

According to Figs. 7a, 7b two films 1a, 1b, each conforming to the second embodiment described above, are arranged one on top of the other with bases 2a, 2b carrying congruent coated areas 3a', 3b and interstices 4a', 4b to form a superposition which again is wound into an electrode configuration 9 like the one apparent in Figs. 3, 4. In a manner similar to the second embodiment, the coated areas 3a and interstices 4a on a first partially conductively coated surface on the upper side of the superposition, i.e., on the first such surface of the upper film 1a, of a turn are congruent with the coated areas 3b' and the interstices 4b', respectively, on a second partially conductively coated surface on the lower side of the superposition, i.e., on the second such surface of the lower film 1b, of the subsequent turn in each case.

There are, of course, many possibilities of forming electrode configurations in the form of a winding within the scope of the invention. E.g., several films, containing at least one film according to the invention and not excluding films without electrically conductive coating, may be arranged one on top of the other to form a superposition and the superposition wound into an electrode configuration according to the invention. Apart from windings, it is possible to superpose subsequent sections of a film according to the invention or of a superposition of films comprising at least one film according to the invention into an inventive electrode configuration in some other way, e.g., by zigzag-folding of the film or superposition.

In some cases it may be advisable to use patches of metal foil for those electrodes which are electrically conductively connected to conductive components as they may have to carry considerable currents unless the electrode is directly applied to the conductive component.

The electrode configurations are preferably dry, that is, they do not contain impregnation fluids applied to the film during the manufacturing of the electrode configuration and having penetrated its base. Of course, the dimensions, shapes and arrangement of the coated areas and their electrical properties as well as the dimensions and properties of the base may vary widely depending on the specific purposes of the electrode configuration for the production of which the film is to be used.

### List of reference symbols

- 1, 1a, 1b: film
- 2, 2a, 1b: base
- 3, 3', 3a, 3a', 3b, 3b': coated area
- 4, 4', 4a, 4a', 4b, 4b': interstice
- 5, 5': patch
- 6: uncoated strip
- 7: bridge
- 8: lead
- 9: electrode configuration
- 10: conductor rod
- 11: metal plate

## Claims

1. A film (1; 1a; 1b) with a base (2; 2a; 2b) comprising an electrically insulating polymer or mixture of polymers, the film (1; 1a; 1b) having a partially conductively coated surface where the base (2; 2a; 2b) carries a partial coating of electrically conductive material, **characterized in that** the coating on the said surface forms at least one sequence of contiguous conductively coated areas (3, 3'; 3a, 3a'; 3b, 3b'), each of them spaced from lateral edges of the film (1; 1a; 1b), the conductively coated areas (3, 3'; 3a, 3a'; 3b, 3b') following upon each other in a longitudinal direction of the film (1; 1a; 1b) separated by non-coated interstices (4; 4a, 4a'; 4b, 4b').

2. A film (1; 1a; 1b) according to claim 1, **characterized in that** the base (2; 2a; 2b) comprises at least one of the following materials: polyethylene, polystyrole, polypropylene, polycarbonate, polyimide, PET, PEN, Polyester, epoxy resin, polysulfone.

3. A film (1; 1a; 1b) according to claim 1 or 2, **characterized in that** the partial coating is a metallization, carbon or a semiconducting material.

4. A film (1; 1a; 1b) according to one of claims 1 to 3, **characterized in that** the partial coating has nonuniform conductivity, in particular, is patterned or graded.

5. A film (1; 1a; 1b) according to one of claims 1 to 4, **characterized in that** a thickness of the film (1; 1a; 1b) is between 2µm and 20µm.

6. A film (1; 1a; 1b) according to one of claims 1 to 5, **characterized in that** the extension of the conductively coated areas (3, 3'; 3a, 3a'; 3b, 3b') perpendicular to the longitudinal direction varies.

7. A film (1; 1a; 1b) according to one of claims 1 to 6, **characterized in that** the longitudinal extension of the conductively coated areas (3, 3'; 3a, 3a'; 3b, 3b') varies, in particular, is proportional to a square root of the longitudinal position of the conductively coated area (3, 3'; 3a, 3a'; 3b, 3b') on the film (1; 1a; 1b).

8. A film (1; 1a; 1b) according to one of claims 1 to 7, **characterized in that** it has a first partially conductively coated surface and an opposite second partially conductively coated surface where the base (2; 2a; 2b) carries a partial coating of electrically conductive material in each case, the base (2; 2a; 2b) carrying on each partially conductively coated surface at least one sequence of contiguous conductively coated areas (3, 3'; 3a, 3a'; 3b, 3b'), each of them spaced from lateral edges of the film (2; 2a; 2b), the conductively coated areas (3, 3'; 3a, 3a'; 3b, 3b') following upon each other in a longitudinal direction of the film (1; 1a; 1b) separated by non-coated interstices (4; 4a, 4a'; 4b, 4b').

9. An electrode configuration (9) for controlling electric field distributions comprising at least one film (1; 1a; 1b) according to one of claims 1 to 8, **characterized in that** subsequent sections of the at least one film (1; 1a; 1b) are arranged one on top of the other, with the conductively coated areas (3, 3'; 3a, 3a'; 3b, 3b') forming parallel electrode layers separated by electrically insulating layers, and with the electrode layers forming a plurality of electrodes which are electrically insulated from each other.

10. An electrode configuration (9) according to claim 9, **characterized in that** at least one electrode layer is made up of two conductively coated areas (3', 3; 3a', 3b; 3b', 3a) arranged one immediately on top of the other such that the two conductively coated areas (3', 3; 3a', 3b; 3b', 3a) are in electrically conductive contact.

11. An electrode configuration according to claim 10, **characterized in that** two conductively coated areas (3', 3; 3a', 3b; 3b', 3a) making up an electrode layer are in each case congruent.

12. An electrode configuration (9) according to claim 10 or 11, **characterized in that** it comprises two films (1a, 1b), each with at least one partially conductively coated surface, the two said films (1a, 1b) being arranged one on top of the other, with partially conductively coated surfaces facing each other.

13. An electrode configuration (9) according to one of claims 10 to 12, **characterized in that** the at least one film (1; 1a, 1b) exhibits a first partially conductively coated surface and an opposite second partially conductively coated surface, where the base (2; 2a; 2b) carries a partial coating of electrically conductive material in each case, with both the first partially conductively coated surface and the second partially conductively coated surface of a section being in direct contact with one of the partially conductively coated surfaces of a previous or a subsequent section, respectively.

14. An electrode configuration (9) according to one of claims 9 to 13, **characterized in that** it comprises at least one electrode with a sequence of several, in particular two, electrode layers arranged one on top of the other and separated in each case by an electrically insulating layer.

15. An electrode configuration (9) according to claim 14, **characterized in that** the said electrode comprises at least one continuous conductively coated area (3, 3'; 3a, 3a'; 3b, 3b') extending over its whole length.

16. An electrode configuration (9) according to one of claims 9 to 15, **characterized in that** it is a dry electrode configuration.

17. An electrode configuration (9) according to one of claims 9 to 16, **characterized in that** it comprises a winding of the at least one film (1; 1a, 1b), with the subsequent sections arranged one on top of the other being formed by subsequent turns of the winding.

18. A bushing with a conductor and a frame surrounding the conductor, the bushing comprising an electrode configuration (9) according to claim 17 surrounding the conductor and filling a gap between the conductor and the frame.

19. A bushing according to claim 18, **characterized in that** an innermost electrode of the electrode configuration (9) is electrically conductively connected to the conductor and an outermost electrode of the electrode configuration (9) is electrically conductively connected to the frame.

20. A method of using an electrode configuration (9) according to one of claims 9 to 17 or a bushing according to claim 18 or 19, **characterized in that** the potential difference between consecutive electrodes of the electrode configuration (9) is below the minimum of the Paschen curve.
